# EUROPÄISCHE PATENTSCHRIFT

(11) **EP 1 927 177 B1**
(45) Veröffentlichungstag und Bekanntmachung des Hinweises auf die Patenterteilung: **06.03.2019**
(21) Anmeldenummer: 06778413.2
(22) Anmeldetag: 30.08.2006
(51) Int. Cl.: H02J 7/14

(54) **KFZ-GENERATOR MIT STERNPUNKT-ABGRIFF FÜR EIN MEHRSPANNUNGSBORDNETZ**
MOTOR-GENERATOR HAVING A NEUTRAL POINT FOR A MULTI-VOLTAGE ELECTRIC SYSTEM
GENERATEUR DE VEHICULE A MOTEUR A PRISE NEUTRE POUR UN RESEAU DE BORD POLYCOURANT

(30) Priorität: 08.09.2005 DE 102005042666
(43) Veröffentlichungstag der Anmeldung: 04.06.2008
(73) Patentinhaber: SEG Automotive Germany GmbH, 70499 Stuttgart (DE)
(72) Erfinder: WOLF, Gert, 71563 Affalterbach (DE); SHENDI, Alexander, 71679 Asperg (DE)
(74) Vertreter: Steinbauer, Florian
(86) Internationale Anmeldenummer: PCT/EP2006/065833
(87) Internationale Veröffentlichungsnummer: WO 2007/028744

(56) Entgegenhaltungen:
- EP-A2- 0 539 982
- EP-A2- 0 740 391
- DE-A1- 4 226 311
- DE-A1- 10 262 000
- US-B1- 6 392 348

## Beschreibung

Die Erfindung betrifft einen Generator zur Versorgung elektrischer Verbraucher in einem elektrischen Netz, insbesondere einem Kfz-Bordnetz, gemäß dem Oberbegriff des Patentanspruchs 1.

Herkömmliche Kfz-Bordnetze umfassen üblicherweise einen vom Verbrennungsmotor angetriebenen Generator, wie z.B. einen Klauenpolgenerator, der die im Netz benötigte elektrische Leistung bereitstellt. Der Generator erzeugt eine Wechselspannung, die in der Regel mittels einer Gleichrichter-Brückenschaltung gleichgerichtet wird. Die Generator-Ausgangsspannung wird mit Hilfe eines Generatorreglers auf einen vorgegebenen Wert, z.B. 14V oder 42V, geregelt.

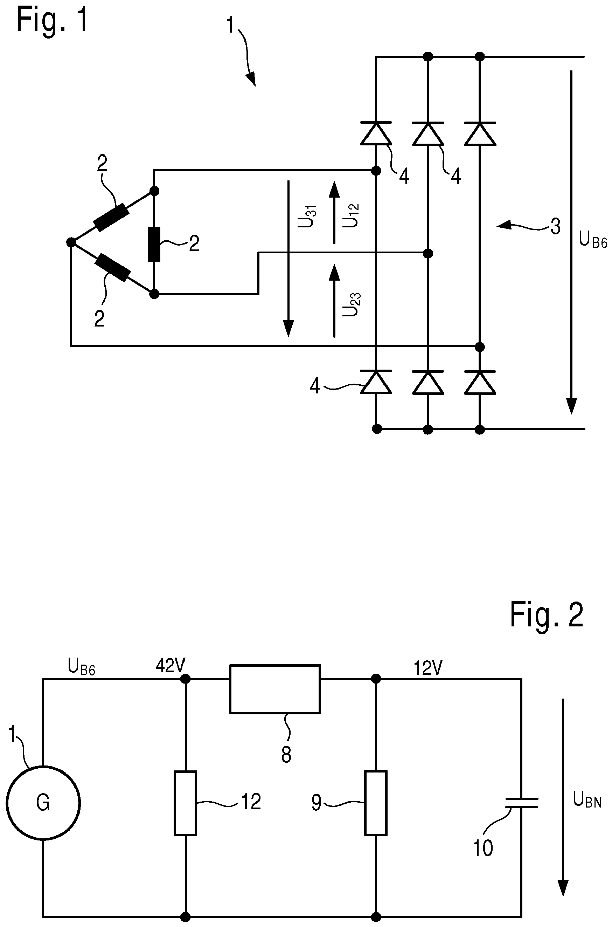

Fig. 1 zeigt einen aus dem Stand der Technik bekannten Generator 1 mit einer Gleichrichter-Brückenschaltung 3. Der dargestellte Generator 1 ist hier 3-phasig ausgebildet und umfasst drei Stränge 2, die in Dreieckschaltung verschaltet sind. Zwischen jeweils zwei Eckpunkten der Dreieckschaltung entstehen bei Betrieb Spannungen U₁₂, U₂₃ bzw. U₃₁, die jeweils um eine Phase von 120° gegeneinander verschoben sind. Die drei Phasenspannungen werden mittels der Gleichrichterschaltung 3, die mehrere Dioden 4 aufweist, in eine Gleichspannung U_{B6} transformiert.

Fig. 2 zeigt eine schematische Darstellung eines aus dem Stand der Technik bekannten Kfz-Mehrspannungs-Bordnetzes mit elektrischen Verbrauchern 9,12 und Energiespeichern 10, die von einem Generator 1 mit elektrischer Leistung versorgt werden. Das Bordnetz umfasst eine Vielzahl solcher Verbraucher, die hier exemplarisch durch die Elemente 9,10,12 dargestellt sind.

Das Bordnetz umfasst generatorseitig ein erstes Teilnetz mit einer variablen Netzspannung von 14V bis 42V und ein zweites Teilnetz mit einer festen Nennspannung von etwa 14V. Ein Längsregler oder DC-DC Wandler 8 regelt die Netzspannung des zweiten Teilnetzes auf einen vorgegebenen Wert (hier 14V).
Ein wesentlicher Nachteil dieses Bordnetzes besteht darin, dass der Längsregler bei hohen Generatorspannungen (gegen 42V) eine sehr hohe Verlustleistung hat, da eine relativ hohe Eingangsspannung (42V) auf eine relativ niedrige Ausgangsspannung (14V) geregelt werden muss. Die Verlustleistung des Längsreglers 8 kann bei einem Stromfluss von etwa 100A eine Größenordnung von mehreren kW Leistung annehmen. Der Längsregler muss außerdem an diese Leistungsklasse angepasst und entsprechend dimensioniert werden.

Dokument EP 0 539 982 offenbart einen Generator mit einem Brückengleichrichter, bei dem der negative Ausgang des Gleichrichters das negative Ausgangspotential bildet, und bei dem wahlweise die Sternpunktspannung eines Generators oder der positive Ausgang des Gleichrichters das positive Ausgangspotential bildet. Es ist daher die Aufgabe der vorliegenden Erfindung, eine Bordnetz-Konfiguration zu schaffen, bei der die Verlustleistung wesentlich geringer ist und der Spannungsregler für geringere Leistungen dimensioniert werden kann.
Gelöst wird diese Aufgabe gemäß der Erfindung durch die im Patentanspruch 1 angegebenen Merkmale. Weitere Ausgestaltungen der Erfindung sind Gegenstand von Unteransprüchen.
Ein wesentlicher Gedanke der Erfindung besteht darin, den Generator in Sternschaltung zu verschalten und die gleichgerichtete Generatorspannung als eine erste Versorgungsspannung zu nutzen, und zusätzlich den Sternpunkt der Sternschaltung als zweiten Anschluss aus dem Generator herauszuführen und diese Sternpunkt-Spannung als eine zweite Versorgungsspannung zu nutzen. Mit den beiden Spannungen können z.B. verschiedene Netze mit unterschiedlicher Nennspannung versorgt werden.
Sofern das am Generator angeschlossene Netz einen Spannungswandler, wie z.B. einen Längsregler umfasst, ist dieser vorzugsweise sowohl an der Gleichrichter-Ausgangsspannung als auch an der Sternpunkt-Spannung angeschlossen. Der Spannungswandler hat somit zwei unterschiedliche Eingangspotentiale, zwischen denen er auswählen kann. Der Spannungswandler wählt das Eingangspotential dabei so aus, dass die Spannungsdifferenz zwischen dem Eingangspotential und der sekundärseitigen Netzspannung (z.B. 14V) möglichst gering ist. Die Leistungsverluste im Spannungswandler können dadurch sehr klein gehalten werden. Darüber hinaus steigt der Wirkungsgrad der Spannungsversorgung. Der Spannungswandler kann im Übrigen für eine wesentlich geringere Leistungsklasse dimensioniert werden.

Der Spannungswandler umfasst vorzugsweise eine Schalteinrichtung, die den Eingang des Wandlers zwischen den beiden Versorgungspotentialen umschaltet.

Gemäß einer bevorzugten Ausführungsform der Erfindung ist der Spannungswandler ein Längsregler. In diesem Fall können nur Versorgungsspannungen mit einem höheren Potential als die geregelte Netzspannung (z.B. 12V) als Eingangspotential gewählt werden. Die erfindungsgemäße Schalteinrichtung ist entsprechend derart ausgelegt, dass die Sternpunktspannung ausgewählt wird, wenn sie größer ist als die sekundärseitige Netzspannung und andernfalls die Gleichrichterspannung ausgewählt wird.

Der Spannungswandler umfasst vorzugsweise eine Einrichtung zum Messen der Gleichrichterspannung oder der Sternpunktspannung.

Der Generator ist vorzugsweise ein 3-phasiger Generator, wie z.B. ein Klauenpolgenerator, kann aber auch ein mehrphasiger (>3 Phasen) Generator sein.

Die Erfindung wird nachstehend anhand der beigefügten Zeichnungen beispielhaft näher erläutert. Es zeigen:
Fig. 1 ein Blockschaltbild eines aus dem Stand der Technik bekannten 3-phasigen Generators;
Fig. 2 eine schematische Darstellung eines Bordnetzes gemäß dem Stand der Technik;
Fig. 3 ein Blockschaltbild eines Generators gemäß einer ersten Ausführungsform der Erfindung; und
Fig. 4 eine schematische Darstellung eines Bordnetzes mit einem Generator gemäß Fig. 3.

Bezüglich der Erläuterung der Fig. 1 und 2 wird auf die Beschreibungseinleitung verwiesen.

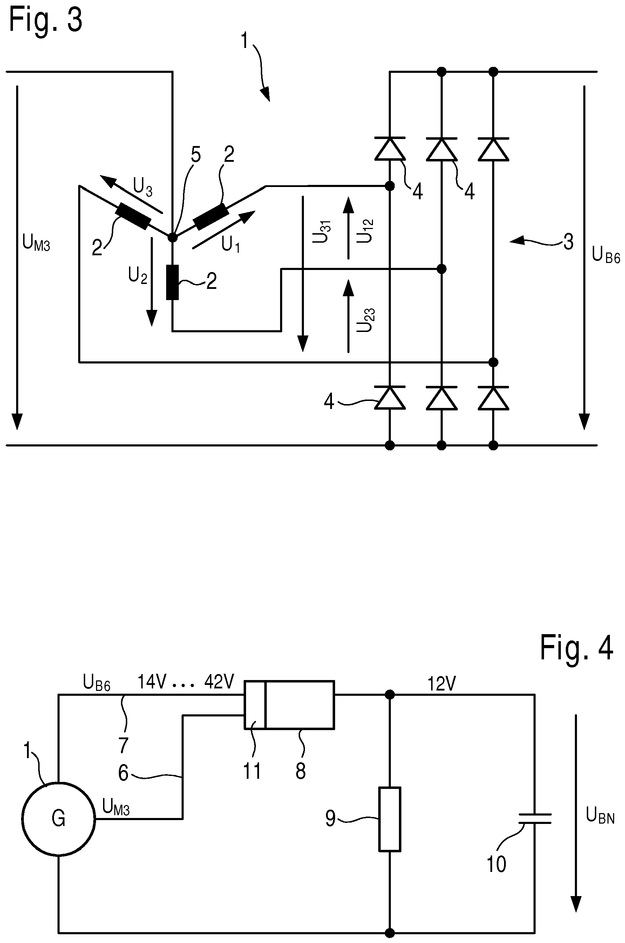

Fig. 3 zeigt das Blockschaltbild eines Generators gemäß einer bevorzugten Ausführungsform der Erfindung. Der Generator 1 umfasst drei Stränge 2, die in Sternschaltung verschaltet sind. Die in den Strängen 2 induzierten Spannungen sind hier mit U₁₂, U₂₃ und U₃₁ bezeichnet. Diese Wechselspannungen werden mittels einer Gleichrichterbrücke 3, bestehend aus sechs Dioden 4 gleichgerichtet. Die Ausgangsspannung des Gleichrichters 3 ist mit U_{B6} bezeichnet und bildet ein erstes Versorgungspotential für das elektrische Netz. Daneben ist der Sternpunkt 5 des Generators 1 als separater Anschluss aus dem Generator 1 herausgeführt. Die Sternpunktspannung ist mit U_{M3} bezeichnet. Diese Spannung bildet ein zweites Versorgungspotential für elektrische Verbraucher. Der Generator 1 erzeugt hier eine variable Ausgangsspannung zwischen 14V und 42V am Gleichrichterausgang. Für die Sternpunktspannung U_{M3} gilt: U_{M3}∼0,5·U_{B6}.

Fig. 4 zeigt eine schematische Darstellung eines Bordnetzes mit einem Generator 1, der entsprechend Fig. 3 aufgebaut ist. Beide Versorgungspotentiale U_{B6}, U_{M3} werden über entsprechende Versorgungsleitungen 6 und 7 einem Längsregler 8 zugeführt, der die sekundärseitige Netzspannung auf etwa 12V regelt. Der Längsregler 8 umfasst eine Schalteinrichtung 11, die in Abhängigkeit von der Höhe der Generatorspannung eines der beiden Versorgungspotentiale U_{B6} bzw. U_{M3} auswählt.

Da der Längsregler 8 ein Eingangspotential benötigt, das höher ist als die geregelte Netzspannung, wählt die Schalteinrichtung 11 die Sternpunktspannung U_{M3} als Eingangspotential, wenn die Gleichrichter-Ausgangsspannung U_{B6} einen Wert von etwa 27V bzw. die Sternpunktspannung U_{M3} einen Wert von 13,5V übersteigt. Bei geringeren Spannungen wird dagegen die Gleichrichter-Ausgangsspannung U_{B6} ausgewählt.

Der Längsregler umfasst vorzugsweise einen Spannungsmesser (nicht gezeigt), der die Gleichrichter-Ausgangsspannung U_{B6} oder die Sternspannung U_{M3} misst, um die geeignete Eingangsspannung auswählen zu können. Die Schalteinrichtung 11 könnte wahlweise auch von einem Steuergerät angesteuert werden.

Die dargestellte Anordnung hat den Vorteil, dass die Spannungsdifferenz zwischen Eingangsspannung und sekundärseitiger Netzspannung immer möglichst gering ist, wodurch die Verlustleistung des Längsreglers 8 wesentlich reduziert werden kann. Der Wirkungsgrad der Generatoranordnung steigt entsprechend. Darüber hinaus kann der Längsregler 8 wesentlich kleiner dimensioniert werden.

### Bezugszeichenliste

- 1: Generator
- 2: Stränge
- 3: Gleichrichter-Brückenschaltung
- 4: Dioden
- 5: Sternpunkt
- 6: Versorgungsleitung
- 7: Versorgungsleitung
- 8: Längsregler
- 9: elektrischer Verbraucher
- 10: Energiespeicher
- 11: Schalteinrichtung
- 12: Verbraucher mit variabler Spannung
- U_{M3}: Sternpunktspannung
- U_{B6}: Gleichrichter-Ausgangsspannung
- U_{BN}: Bordnetzspannung

## Patentansprüche

1. Generatoranordnung zur Versorgung elektrischer Verbraucher (9,10,12) in einem elektrischen Netz, insbesondere einem Kfz-Bordnetz, umfassend einen Generator (1) mit mehreren Strängen (2), die in Sternschaltung verschaltet sind, und eine an den Strängen (2) angeschlossene Gleichrichterschaltung (3), die eine Gleichspannung (U_{B6}) zur Versorgung der Verbraucher (9,10,12) erzeugt, **dadurch gekennzeichnet, dass**
- der Sternpunkt (5) der Sternschaltung als weiterer Anschluss aus dem Generator (1) herausgeführt ist, und
- ein Spannungswandler (8) vorgesehen ist, der sowohl mit dem Ausgang der Gleichrichterschaltung (3) als auch mit dem Sternpunkt (5) verbunden ist und eine Schalteinrichtung (11) umfasst, die in Abhängigkeit von der Höhe einer Generatorspannung (U_{B6},U_{M3}) die Gleichrichterspannung (U_{B6}) oder die Sternpunktspannung (U_{M3}) als Eingangsspannung für den Spannungswandler (8) auswählt.

2. Generatoranordnung nach Anspruch 1, **dadurch gekennzeichnet, dass** der Spannungswandler (8) ein Längsregler ist.

3. Generatoranordnung nach Anspruch 1 oder 2, **dadurch gekennzeichnet, dass** der Spannungswandler (8) eine Einrichtung zum Messen der Gleichspannung (U_{B6}) oder der Sternspannung (U_{M3}) umfasst.

4. Generatoranordnung nach einem der vorhergehenden Ansprüche, **dadurch gekennzeichnet, dass** die Schalteinrichtung (8) die Sternspannung (U_{M3}) als Eingangsspannung auswählt, wenn die Sternspannung (U_{M3}) größer ist als die geregelte Spannung.

5. Generatoranordnung nach einem der vorhergehenden Ansprüche, **dadurch gekennzeichnet, dass** der Generator (1) ein 3-phasiger Generator ist.

6. Generatoranordnung nach einem der vorhergehenden Ansprüche, **dadurch gekennzeichnet, dass** der Generator (1) eine variable Spannung zwischen 14V und 42V erzeugt.

7. Generatoranordnung nach einem der vorhergehenden Ansprüche, **dadurch gekennzeichnet, dass** das elektrische Netz der Verbraucher (9,10) ein 12V-Netz ist.

## Claims

1. Generator arrangement for supplying electrical consumers (9, 10, 12) in an electrical network, in particular an on-board vehicle network, comprising a generator (1) having a plurality of strands (2) which are connected in a star connection, and a rectifier circuit (3) which is connected to the strands (2) and generates a DC voltage (U_{B6}) for supplying the consumers (9, 10, 12), **characterized in that**
- the star point (5) of the star connection is led out of the generator (1) as a further connection, and
- a voltage converter (8) is provided which is connected both to the output of the rectifier circuit (3) and to the star point (5) and comprises a switching device (11) which selects the rectifier voltage (U_{B6}) or the star point voltage (U_{M3}) as input voltage for the voltage converter (8) as a function of the height of a generator voltage (U_{B6}, U_{M3}).

2. Generator arrangement according to claim 1, **characterized in that** the voltage converter (8) is a longitudinal regulator.

3. Generator arrangement according to claim 1 or 2, **characterized in that** the voltage converter (8) comprises a device for measuring the DC voltage (U_{B6}) or the star voltage (U_{M3}).

4. Generator arrangement according to any one of the preceding claims, **characterized in that** the switching device (8) selects the star voltage (U_{M3}) as input voltage if the star voltage (U_{M3}) is greater than the regulated voltage.

5. Generator arrangement according to any one of the preceding claims, **characterized in that** the generator (1) is a 3-phase generator.

6. Generator arrangement according to any one of the preceding claims, **characterized in that** the generator (1) generates a variable voltage between 14V and 42V.

7. Generator arrangement according to any one of the preceding claims, **characterized in that** the electrical network of the consumers (9, 10) is a 12V network.

## Revendications

1. Système de générateur destiné à alimenter des consommateurs d'énergie électrique (9, 10, 12) dans un réseau électrique, en particulier un réseau de bord d'un véhicule automobile, comprenant un générateur (1) ayant plusieurs branches (2) qui sont interconnectées dans un montage en étoile, et un montage en redresseur (3) raccordé aux branches (2), qui génère une tension continue (U_{B6}) pour alimenter les consommateurs (9, 10, 12), **caractérisé en ce que**
- le point neutre (5) du montage en étoile est réalisé sous la forme d'une borne supplémentaire de sortie du générateur (1), et
- un convertisseur de tension (8) est prévu, qui est relié aussi bien à la sortie du montage en redresseur (3) qu'au point neutre (5) et comprend un dispositif de commutation (11) qui sélectionne la tension du redresseur (U_{B6}) ou la tension du point neutre (U_{M3}) en tant que tension d'entrée du convertisseur de tension en fonction de la grandeur d'une tension du générateur (U_{B6}, U_{M3}).

2. Système de générateur selon la revendication 1, **caractérisé en ce que** le convertisseur de tension (8) est un régulateur série.

3. Système de générateur selon la revendication 1 ou 2, **caractérisé en ce que** le convertisseur de tension (8) comprend un dispositif pour mesurer la tension continue (U_{B6}) ou la tension étoilée (U_{M3}).

4. Système de générateur selon l'une des revendications précédentes, **caractérisé en ce que** le dispositif de commutation (8) sélectionne la tension d'étoile (U_{M3}) en tant que tension d'entrée lorsque la tension d'étoile (U_{M3}) est supérieure à la tension régulée.

5. Système de générateur selon l'une des revendications précédentes, **caractérisé en ce que** le générateur (1) est un générateur triphasé.

6. Système de générateur selon l'une des revendications précédentes, **caractérisé en ce que** le générateur (1) génère une tension variable comprise entre 14 V et 42 V.

7. Système de générateur selon l'une des revendications précédentes, **caractérisé en ce que** le réseau électrique du consommateur (9, 10) est un réseau à 12 V.
